# FASCICULE DE BREVET EUROPEEN

(11) **EP 3 744 572 B1**
(45) Date de publication et mention de la délivrance du brevet: **27.03.2024**
(21) Numéro de dépôt: 20177068.2
(22) Date de dépôt: 28.05.2020
(51) Int. Cl.: B60R 11/04

(54) **PANNEAU ARRIERE DE VEHICULE AUTOMOBILE INTEGRANT UNE CAMERA DE VISION ARRIERE ET PARTIE ARRIERE DE VEHICULE COMPORTANT UN TEL PANNEAU**
HECKPANEEL EINES KRAFTFAHRZEUGS, IN DAS EINE RÜCKFAHRKAMERA EINGEBAUT IST, UND FAHRZEUGHECKTEIL, IN DAS DIESES PANEEL EINGEBAUT IST
REAR PANEL OF A MOTOR VEHICLE INCLUDING A REAR VIEWING CAMERA AND REAR PART OF A VEHICLE COMPRISING SUCH A PANEL

(30) Priorité: 29.05.2019 FR 1905702
(43) Date de publication de la demande: 02.12.2020
(73) Titulaire: Renault s.a.s, 92100 Boulogne Billancourt (FR)
(72) Inventeur: CHAPRON, Thibault, 78210 SAINT CYR L'ECOLE (FR); LEFEBVRE, Benjamin, 91470 LES MOLIERES (FR)
(74) Mandataire: Renault Group

(56) Documents cités:
- EP-A1- 0 719 672
- DE-A1-102012 203 674
- FR-A1- 2 621 872
- FR-A1- 2 663 272
- US-A- 3 436 758
- US-A1- 2003 021 041

## Description

### Domaine technique de l'invention

L'invention concerne la conception et l'agencement d'un panneau arrière de carrosserie de véhicule automobile équipé d'une caméra arrière de rétro vision.

L'invention concerne aussi une partie arrière d'un véhicule automobile comportant un tel panneau arrière de carrosserie, notamment sous la forme d'un ouvrant arrière.

### Arrière-plan technique

Pour améliorer le confort visuel de rétro-vision à bord d'un véhicule automobile et notamment pour le conducteur, des systèmes liant une caméra de prise de vues positionnée sur la lunette arrière et un écran peuvent remplacer le rétroviseur intérieur.

Cependant, pour les véhicules équipés d'une vitre arrière ou lunette arrière, la réglementation impose la présence d'un rétroviseur intérieur du type à miroir réfléchissant qui doit être présent, même si un système de rétro vision comportant un écran et une caméra de prise de vues est fourni.

Cette obligation réglementaire permet de palier une éventuelle défaillance du système de rétro vision.

L'écran d'affichage se comporte comme un miroir lorsqu'il s'éteint et il est positionné en lieu et place du rétroviseur intérieur traditionnel. Cet « écran-miroir » doit donc être homologué comme un rétroviseur et il doit permettre de voir une zone règlementaire à travers la lunette arrière lorsqu'il est en mode miroir.

Cependant, la caméra de prises de vue fixée sur la lunette arrière (Qui est utilisée dans le mode normal de fonctionnement, avec l'écran allumé) a tendance à obstruer la zone règlementaire de rétro vision.

Selon les cas, en particulier en fonction de la taille et des formes de la lunette arrière, il peut être impossible de positionner l'écran-miroir conformément à la réglementation.

Au mieux, le positionnement de l'écran-miroir n'est pas satisfaisant : il a tendance à être placé trop bas sur le parebrise (afin de voir la zone règlementaire par dessous la caméra) ce qui gêne la vision du conducteur vers l'avant, voire enfreint la règlementation régissant la vision vers l'avant.

De tels problèmes selon l'art antérieur sont illustrés à la figure 3 du présent brevet.

US 2003/021041 A1 divulgue un panneau transversal arrière selon le préambule de la revendication 1.

### Résumé de l'invention

L'invention propose un panneau transversal arrière de véhicule automobile :
- qui comporte une partie supérieure qui s'étend longitudinalement vers l'arrière ;
- qui porte une vitre arrière d'orientation transversale ;
- dont la partie supérieure comporte un becquet extérieur qui s'étend vers l'arrière au-delà du bord supérieur de la vitre arrière ; et
- qui porte une caméra arrière de prise de vues,
caractérisé en ce que :
- le panneau arrière comporte une surface réfléchissante orientée vers l'arrière ;
- le becquet comporte un logement ouvert en direction de la surface réfléchissante ; et
- la caméra est agencée dans le logement du becquet et son champ de prise de vues est orienté en direction de la surface réfléchissante; et
- la surface réfléchissante est portée par la vitre arrière.

Selon d'autres caractéristiques du panneau transversal arrière :
- sa partie supérieure comporte un élément d'habillage intérieur qui délimite verticalement vers le haut le champ de rétro vision d'un conducteur du véhicule.

L'invention propose aussi une partie arrière de véhicule automobile comportant :
- un pavillon supérieur ; et
- un panneau transversal arrière selon l'invention,
caractérisée en ce que la partie supérieure du panneau transversal arrière s'étend vers l'arrière dans le prolongement du pavillon supérieur.

Selon d'autres caractéristiques de la partie arrière de véhicule :
- le panneau arrière est un ouvrant arrière qui est monté pivotant par rapport au pavillon supérieur ;
- l'ouvrant arrière est monté pivotant par rapport au pavillon supérieur autour d'un axe transversal, au niveau de son extrémité supérieure.

### Brève description des figures

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue longitudinale arrière de la partie arrière d'un véhicule automobile selon l'invention ;
- la figure 2 est une vue en section, par le plan vertical et longitudinal 2-2 de la figure 1 ; de la partie arrière du véhicule ; et
- la figure 3 est une vue analogue à celle de la figure 2 qui représente la conception de la partie arrière d'un véhicule selon l'état de la technique.

### Description détaillée de l'invention

Pour la description de l'invention et la compréhension des revendications, on les orientations verticale, longitudinale et transversale selon le repère V, L, T indiqué aux figures dont les axes longitudinal L et transversal T s'étendent dans un plan horizontal.

Par convention, l'axe longitudinal L est orienté de l'arrière vers l'avant.

Dans la description qui va suivre, des éléments identiques, similaires ou analogues seront désignés par les mêmes chiffres de référence.

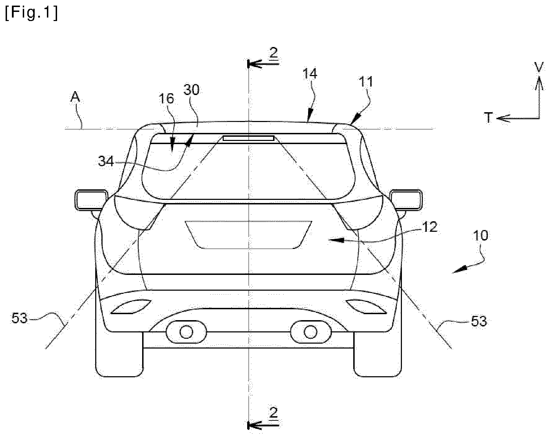

On a représenté à la figure 1, de manière schématique, la partie arrière 11 d'un véhicule automobile 10 qui, à titre non limitatif comporte un panneau transversal arrière 12 qui est ici une porte de coffre en forme d'un hayon arrière qui est monté pivotant par rapport à la caisse du véhicule, et notamment par rapport à son pavillon supérieur de toit 14, autour d'un axe supérieur horizontal A-A.

La porte arrière 12 comporte, une vitre arrière 16, aussi appelée lunette arrière.

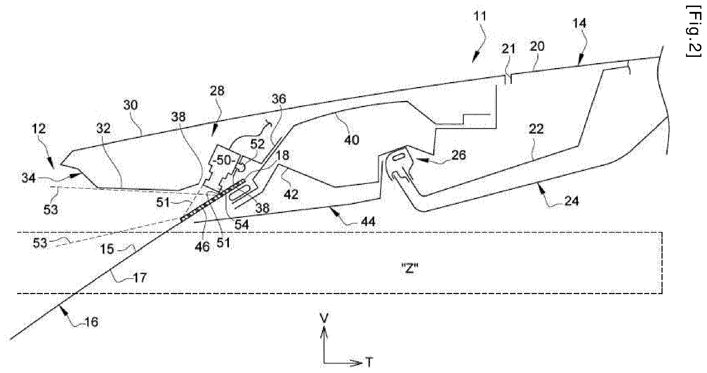

Comme on peut le voir plus en détails à la figure 2 , le pavillon 14 comporte une tôle de toit 20, une tôle intérieure 22 et un élément d'habillage 24.

La tôle de toit 20 est délimitée par un bord transversal arrière 21 et le pavillon 14 porte à son extrémité arrière une garniture d'étanchéité 26.

La porte arrière 12 comporte une partie supérieure 28 comportant une tôle supérieure 30, d'orientation globalement horizontale et qui, en position fermée de la porte arrière, s'étend longitudinalement vers l'arrière dans le prolongement du bord transversal arrière 21 de la tôle de toit 20.

La tôle supérieure 30 se prolonge par une tôle inférieure 32 globalement parallèle qui s'étend longitudinalement vers l'avant pour constituer un becquet arrière supérieur 34.

Le becquet arrière 34 a notamment pour fonction d'améliorer l'aérodynamisme et l'aspect esthétique de la partie arrière 11 du véhicule 10.

Au voisinage de son bord transversal arrière 36, la tôle inférieure 32 du becquet arrière 34 comporte une ouverture ou découpe 38 qui débouche en regard d'une portion supérieure en vis-à-vis de la surface externe 15 de la vitre arrière 16.

La portion supérieure de la vitre arrière 16 est délimitée par un bord supérieur transversal 18 et elle est ici collée, par une portion de sa surface interne 17, sur une portion en vis-à-vis d'une tôle interne 40 de la partie supérieure 28 de la porte arrière 12.

La tôle interne 40 est doublée par une autre tôle 42 qui coopère de manière étanche avec la garniture d'étanchéité 26.

Enfin, à l'intérieur du véhicule, la partie supérieure 28 de la porte arrière 12, comporte un élément d'habillage intérieur 44.

Conformément aux enseignements de l'invention, le becquet arrière 34 porte une caméra 50 de prise de vues qui a pour fonction de capter des images, fixes ou dynamiques, d'une zone située à l'arrière du véhicule 10, par exemple globalement selon l'axe longitudinal du véhicule.

La caméra 50 est par exemple fixée par emboîtement élastique d'un ou plusieurs pions 52 dans des trous de la tôle inférieure 32 du becquet arrière 34 au voisinage de l'ouverture 38.

Dans ce but, l'axe de prise de vues et le champ de vision de la caméra 50 est orienté globalement vers l'arrière.

Afin de protéger la caméra 50 et/ou pour éviter qu'elle ne s'étende verticalement vers le bas de manière trop importante, la caméra 50 est ici agencée de manière inclinée et son champ de vision 51 est « réfléchi » par une portion de surface réfléchissante 46 qui est agencée en vis-à-vis de l'objectif ou du capteur 54 de la caméra.

A titre non limitatif, la surface réfléchissante 46 est ici un film formant miroir qui est collé sur la surface externe 15.

Après réflexion sur la surface réfléchissante 46, le champ de vision 51 de la caméra de prise de vues 50, qui est globalement orienté vers le bas, est « redressé » sous la forme d'un champ de vision 53 orienté globalement longitudinalement vers l'arrière.

Ainsi réfléchi, le champ de vision 51 de la caméra de prise de vues 50 est bien orienté vers l'arrière pour par exemple renvoyer une image de rétro vision destinée à être affiché sur un écran, non représenté, visible par le conducteur du véhicule.

On a représenté de manière schématique à la figure 2 une zone « Z » de rétro vision, dont la position et le dimensionnement sont définis par la réglementation, et qui ne doit pas être obstruée.

Comme on peut le constater, grâce à l'agencement selon l'invention de la caméra de prise de vues 50, au niveau de la partie arrière 11 du véhicule 10, la zone Z est entièrement dégagée et n'est obstruée par aucune portion d'éléments d'habillage tels que les éléments 24 ou 44.

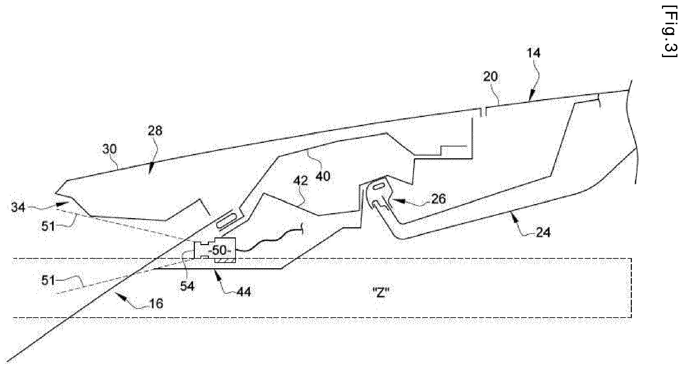

On peut comparer l'agencement et la conception selon l'invention de la figure 2 avec celui de l'art antérieur illustré à la figure 3 dans lequel la caméra 50 est agencée à l'intérieur de l'habitacle sous la tôle intérieure 52 et dans lequel la caméra 50 est masquée par l'élément d'habillage 44.

Un tel agencement entraîne un plus grand dimensionnement de l'élément d'habillage 44 vers le bas et qui s'étend alors dans la zone Z de rétro vision.

A titre de variantes non représentées, la surface réfléchissante du champ de vision 51 de la caméra de prise de vues 50 peut être un simple miroir fixé à l'intérieur sous la vitre arrière 16, ou bien un film adhésif réfléchissant qui est collé sur la surface interne 17 de la vitre arrière 16, ou encore un film réfléchissant inséré entre deux couches de la vitre en verre dit feuilleté.

La surface réfléchissante peut aussi être réalisée sous la forme d'une feuille de matériau formant une glace dite sans tain, notamment dans le cas où elle s'étend sur une plus grande surface et pour conserver la meilleure vision possible à travers la vitre arrière depuis l'habitacle, et ceci même si elle s'étend vers le bas en-dessous de l'élément d'habillage 44.

S'agissant du panneau arrière, il peut s'agir aussi d'un panneau arrière fixe, de la partie supérieure fixe d'un panneau arrière dont la partie inférieure est une porte pivotante.

Lorsque le panneau arrière est une porte arrière pivotante, son axe d'articulation peut être un axe latéral vertical.

## Revendications

1. Panneau transversal arrière (12) de véhicule automobile (10) :
- qui comporte une partie supérieure (28) qui s'étend longitudinalement vers l'arrière ;
- qui porte une vitre arrière (16) d'orientation transversale ;
- dont la partie supérieure (28) comporte un becquet extérieur (34) qui s'étend vers l'arrière au-delà d'un bord supérieur (18) de la vitre arrière (16) ; et
- qui porte une caméra arrière de prise de vues (50),
- le panneau transversal (50) comporte une surface réfléchissante (46) orientée vers l'arrière ;
- le becquet (34) comporte un logement (38) ouvert en direction de la surface réfléchissante (46) ; et
- la caméra (50) est agencée dans le logement (38) du becquet (34) et son champ de prise de vues (51) est orienté en direction de la surface réfléchissante (46).
**caractérisé en ce que** la surface réfléchissante (46) est portée par la vitre arrière (16).

2. Panneau transversal arrière (12) selon l'une quelconque des revendications précédentes, **caractérisé en ce que** sa partie supérieure (28) comporte un élément d'habillage intérieur (44) qui délimite verticalement vers le haut le champ de rétro vision (Z) d'un conducteur du véhicule.

3. Partie arrière (11) de véhicule automobile (10) comportant :
- un pavillon supérieur (14) ; et
- un panneau transversal arrière (12) selon l'une quelconque des revendications précédentes,
**caractérisée en ce que** la partie supérieure (28) du panneau transversal arrière (12) s'étend vers l'arrière dans le prolongement du pavillon supérieur (14, 20).

4. Partie arrière de véhicule automobile selon la revendication précédente, **caractérisée** en en ce que le panneau arrière (12) est un ouvrant arrière qui est monté pivotant par rapport au pavillon supérieur (14).

5. Partie arrière de véhicule automobile selon la revendication précédente, **caractérisée en ce que** l'ouvrant arrière (12) est monté pivotant par rapport au pavillon supérieur (14) autour d'un axe transversal (A), au niveau de son extrémité supérieure.

## Patentansprüche

1. Hintere Querwand (12) eines Kraftfahrzeugs (10),
- welche einen oberen Teil (28) aufweist, der sich in Längsrichtung nach hinten erstreckt;
- welche eine quer ausgerichtete Heckscheibe (16) trägt;
- deren oberer Teil (28) einen äußeren Spoiler (34) aufweist, der sich über einen oberen Rand (18) der Heckscheibe (16) hinaus nach hinten erstreckt; und
- welche eine hintere Bildaufnahmekamera (50) trägt,
- wobei die Querwand (50) eine nach hinten gerichtete reflektierende Fläche (46) aufweist;
- wobei der Spoiler (34) eine Aufnahme (38) aufweist, die in Richtung der reflektierenden Fläche (46) offen ist; und
- wobei die Kamera (50) in der Aufnahme (38) des Spoilers (34) angeordnet ist und ihr Bildaufnahmefeld (51) in Richtung der reflektierenden Fläche (46) ausgerichtet ist,
**dadurch gekennzeichnet, dass** die reflektierende Fläche (46) von der Heckscheibe (16) getragen wird.

2. Hintere Querwand (12) nach einem der vorhergehenden Ansprüche, **dadurch gekennzeichnet, dass** ihr oberer Teil (28) ein Innenverkleidungselement (44) aufweist, welches das Rückblickfeld (Z) eines Fahrers des Fahrzeugs vertikal nach oben begrenzt.

3. Heckteil (11) eines Kraftfahrzeugs (10), welches aufweist:
- ein Karosserieoberteil (14); und
- eine hintere Querwand (12) nach einem der vorhergehenden Ansprüche,
**dadurch gekennzeichnet, dass** sich der obere Teil (28) der hinteren Querwand (12) in der Verlängerung des Karosserieoberteils (14, 20) nach hinten erstreckt.

4. Heckteil eines Kraftfahrzeugs nach dem vorhergehenden Anspruch, **dadurch gekennzeichnet, dass** die hintere Wand (12) ein hinteres Öffnungselement ist, das schwenkbar bezüglich des Karosserieoberteils (14) angebracht ist.

5. Heckteil eines Kraftfahrzeugs nach dem vorhergehenden Anspruch, **dadurch gekennzeichnet, dass** das hintere Öffnungselement (12) an seinem oberen Ende um eine Querachse (A) schwenkbar bezüglich des Karosserieoberteils (14) angebracht ist.

## Claims

1. Rear transverse panel (12) of a motor vehicle (10):
- which has an upper part (28) that extends longitudinally towards the rear;
- which bears a rear window (16) of transverse orientation;
- of which the upper part (28) has an outer spoiler (34) that extends towards the rear beyond an upper edge (18) of the rear window (16); and
- which bears a rear image capturing camera (50),
- the transverse panel (50) has a reflective surface (46) oriented towards the rear;
- the spoiler (34) has a housing (38) that is open in the direction of the reflective surface (46); and
- the camera (50) is arranged in the housing (38) of the spoiler (34) and its image capturing field (51) is oriented in the direction of the reflective surface (46),
**characterized in that** the reflective surface (46) is borne by the rear window (16).

2. Rear transverse panel (12) according to any one of the preceding claims, **characterized in that** its upper part (28) has an inner trim element (44) that delimits, vertically towards the top, the field of rearwards vision (Z) of a driver of the vehicle.

3. Rear part (11) of a motor vehicle (10), having:
- an upper roof (14); and
- a rear transverse panel (12) according to either one of the preceding claims,
**characterized in that** the upper part (28) of the rear transverse panel (12) extends towards the rear in the continuation of the upper roof (14, 20).

4. Rear part of a motor vehicle, according to the preceding claim, **characterized in that** the rear panel (12) is a rear opening leaf that is mounted so as to pivot with respect to the upper roof (14).

5. Rear part of a motor vehicle, according to the preceding claim, **characterized in that** the rear opening leaf (12) is mounted so as to pivot with respect to the upper roof (14) about a transverse axis (A), at its upper end.
